# EUROPEAN PATENT SPECIFICATION

(11) **EP 4 177 529 B1**
(45) Date of publication and mention of the grant of the patent: **03.07.2024**
(21) Application number: 22205793.7
(22) Date of filing: 07.11.2022
(51) Int. Cl.: F24D 19/08, E03B 7/07, E03C 1/10

(54) **TUNDISH WITH INTEGRAL DRY TAP**
VERTEILERRINNE MIT INTEGRIERTEM TROCKENHAHN
PANIER DE COULEE A ROBINET A SEC INTEGRE

(30) Priority: 09.11.2021 GB 202116091
(43) Date of publication of application: 10.05.2023
(73) Proprietor: Altecnic Ltd, Stafford Staffordshire ST16 1GW (GB)
(72) Inventor: PERRY, Gary, Staffordshire, ST16 1GW (GB)
(74) Representative: HGF

(56) References cited:
- EP-A2- 3 128 087
- WO-A1-2018/109475
- GB-A- 2 522 634

## Description

This invention relates to tundishes, in particular tundishes incorporating a dry trap, known as dry trap tundishes.

### BACKGROUND

A tundish is a device that incorporates an air gap to prevent the backflow of fluid through a fluid conduit, such as the discharge pipe of a safety valve (such as an expansion valve, a pressure relief valve, or a pressure and temperature relief valve) as fitted to an unvented hot water storage vessel or cylinder, and which also provides for a visual alert if there is a fault with the cylinder (by observing the fluid flowing across the air gap).

The use of a tundish is required under certain plumbing regulations. In the UK, the relevant provisions include water regulations G19.1, G19.3 and G19.4 contained in the "The Water Supply (Water Fittings) Regulations 1999" and the "Water Byelaws 2000 (Scotland)" for sealed or unvented systems, as well as Part G of the Building Regulations, which state that the discharge pipe from expansion valves, temperature relief valves and combined temperature and pressure relief valves should pass through a tundish with an AUK3 air gap. The tundish must be located within the same room, as near as possible to the relief valve, since it is important that the discharge is clearly seen to warn of a possible problem within the system. A type AA air gap provides a minimum air break of 20mm, or twice the internal diameter of the pipe, depending on which is greater. A device with a type AA air gap provides additional protection above a AUK3 air gap and is suitable to protect against category 5 Back Pressure and category 5 Back Siphonage. The definitions of the type AUK3 and AA air gaps are available from the Water Supply Water Fittings Regulations 1999 and via the Water Regulations Advisory Scheme (WRAS). Products meeting the requirements can obtain Regulation 4 approval, such as via WRAS.

A dry trap is a one-way valve that prevents odours or gasses from entering a building via a downstream outflow pipe. It is known to install a dry trap in series with a tundish as two separate components. It is also known to incorporate a dry trap into a tundish, thereby eliminating the need to install both components individually.

One example of such a dry trap tundish is made by Hotun (RTM), as disclosed in GB2522634 and as illustrated in the accompanying Figure 9. This known dry trap tundish 100 comprises a fluid inlet connector 120 at an upper housing portion 12 of the tundish, for connection to the upstream end of a discharge pipe (not shown). There is a fluid outlet connector 130 at a lower housing portion 14 of the tundish, for connection to a downstream portion of discharge pipe. The lower housing portion 14 comprises a solid wall 125 forming an open-topped cup which flares outwardly from the outlet connector 130 towards the upper housing portion 12. The inlet connector 120 is vertically spaced from the solid wall 125 by a pair of arms 127, which define therebetween a through window 128. An air gap is thus defined between the inlet and outlet connectors 120,130.

As illustrated, a portion of the solid wall 125 is cut-away to show the interior of the dry trap tundish 100. A generally horizontal wall 150 divides the interior into an upper chamber 160 and a lower chamber 162. The horizontal wall 150 includes a round aperture 152 at its centre. A valve member 170 comprises a stem 172 and a head 174. The stem 172 passes vertically through a valve guide 180, which is located centrally above the aperture 152 by means of supporting ribs 182 that extend radially inwardly from the solid wall 125. The head 174 is biased to seal against an underside of the horizontal wall 150 to close the aperture 152 under the action of a coil spring 176. The spring 176 is retained between a lug 178 on an upper end of the valve stem 172 and the valve guide 180. In use, the valve member 170 thus generally seals the aperture 152, preventing foul gases from passing from the lower chamber 162 into the upper chamber 160 and beyond through the open window 128. However, when fluid enters the tundish 100 via the inlet 120, it flows down towards the aperture 152 and, when there is sufficient force of flow or weight of fluid, urges the valve member 170 to open, thereby allowing passage of the fluid through the aperture 152 into the lower chamber for passage out of the outlet 130.

The construction of the valve member 170 is relatively heavy, so a relatively strong spring 176 is required to close the valve against its own weight. As a result, to function well requires relatively large flow conditions. Also, the spring 176 and valve guide 180, which acts as a sliding bearing for the valve stem 174, are both located directly in the fluid flow. As such, any debris, corrosion or deposits will affect the functioning of the valve 170, for example preventing a proper seal and thus allowing odours or gasses to pass from the lower chamber 162 into the upper chamber 160.

Figure 8 of GB2522634 A shows a dry trap tundish according to the preamble of claim 1.

It is a non-exclusive object of the invention to provide an improved dry trap tundish that mitigates at least some of the drawbacks of such known tundishes.

### BRIEF SUMMARY OF THE DISCLOSURE

In accordance with the present invention there is provided a dry trap tundish comprising: an upper housing portion including a liquid inlet connector at an upper end thereof; a lower housing portion including a liquid outlet connector at a lower end thereof; a chamber defined by peripheral walls of the upper and lower housing portions between the inlet and outlet connectors, wherein the chamber is divided into an open upper chamber and a closable lower chamber by a dividing member comprising an aperture; and a movable valve member urged to close the aperture from below under the action of a biasing member and guided by a support structure. The valve member, the biasing member and the support structure are fully located below the dividing member.

Advantageously, the arrangement provides a dry trap tundish that can be highly responsive for quick and easy opening under low flow conditions. The construction is simple, requiring fewer parts and correspondingly fewer asembly steps than known dry trap tundishes. Moreover, because the entirety of the valve member, the biasing member and the support structure are located below the aperture (i.e. downstream), the moving parts are better protected against failure due, for example, to debris carried in the liquid flow.

The valve member may comprise a disc-shaped valve head, in which case the support structure may comprise an outer annular valve guide adapted to cooperatively guide the valve head during movement of the valve member. In some embodiments, the outer annular valve guide comprises ribs extending radially inwardly from the peripheral wall of the lower housing portion. Thus, the valve guide can be formed integrally with the lower housing portion.

The biasing member may comprise a coil spring. This is a convenient and readily-available part to provide the required biasing force to urge the valve member into sealing engagement with the aperture, a lower rim of which forms a valve seat. The support structure may include a stepped hole in which a bottom end of the coil spring is received. The bottom end of the coil spring thus bears against a shoulder formed by the step in the hole to provide the required reaction force. The stepped hole may be a blind hole, closed at a bottom end thereof, or may include a through hole. The support structure may include a column in which the stepped hole is located. The column may be connected to the peripheral wall of the lower housing portion via one or more struts. Advantageously, the support for the spring can thus be formed integrally with the lower housing portion. In some embodiments, the one or more struts may comprise corresponding extensions to the ribs forming the outer annular valve guide. The column may include an outer surface that forms an inner valve guide adapted to cooperatively guide an annular skirt of the valve member during movement thereof. The inner valve guide may be an alternative to or in addition to the outer valve guide. By having both inner and outer valve guides, the movement of the valve can be more reliably controlled and the risk of jamming is reduced. Advantageously, the annular skirt and the column define a spring chamber within, which serves to shield the spring from the liquid flowing through the tundish.

The coil spring may have a spring rate in the range of 10 to 20 g/mm, preferably 23 to 18 g/mm, most preferably 15 g/mm.

The valve member is typically plastic. A plastic valve member is inexpensive and easy to manufacture, for example by moulding. Moreover, a plastic valve member can be made very light weight. For example, the valve member may have a weight in the range of 2.5 to 5 grams, preferably in the range of 2.8 to 4 grams, more preferably about 3.2 grams. The spring rate of the biasing member, e.g. the coil spring, can be selected in dependence on the weight of the valve member in order to provide a predetermined closing force against the valve seat formed around the aperture.

The valve member may include a nib formed on the underside thereof to receive an upper end of the coil spring.

In some embodiments, the dividing member comprising an aperture comprises a gasket, for example formed of rubber or an analogous compliant and waterproof material. Accordingly, the valve member seals against a compliant surface, which is beneficial for a good seal and for longevity of the tundish. Moreover, being a separate component from the upper and lower housing portions, the gasket could be replaced.

The dry trap tundish may further comprise an annular flow diverter above the dividing member for diverting liquid from the inlet connector into the aperture.

The dry trap tundish of any preceding claim, wherein the upper housing portion and the lower housing portion are interconnected by a snap-fit connection. Where a gasket is provided, it may be sized to extend to the junction between the upper and lower housing portions to seal the connection therebetween.

The dry trap tundish, in particular the upper and lower housing portions, may be formed from a thermoplastic material. The upper housing portion may be formed from a transparent material, which may comprise polypropylene or ABS PA758. The flow of liquid through the tundish in a fault condition can still readily be observed because of the use of a transparent material in the upper housing portion. The lower housing portion may be formed from acetal copolymer.

One or both of the inlet and the outlet connector may comprise a standard compression connection. The inlet and the outlet connectors may comprise any combination of male and female fittings. The inlet connector may comprise a standard connection in a selected one of the sizes: 15mm, 22mm, 28mm, ½", ¾" or 1". The outlet connector may comprise a standard connection in a selected one of the sizes: 15mm, 22mm, 28mm, 35mm, ½", ¾", 1" or 11/4". Typically, the outlet is one standard size larger than the inlet.

### BRIEF DESCRIPTION OF THE DRAWINGS

Embodiments of the invention are further described hereinafter with reference to the accompanying drawings, in which:
Figure 1 is a side plan view of a dry trap tundish according to the invention;
Figure 2 is a top plan view of the dry trap tundish of Fig. 1;
Figure 3 is a bottom plan view of the dry trap tundish of Fig. 1;
Figure 4 is a vertical cross-sectional view on A-A of Fig. 1;
Figure 5 is a perspective cross-sectional view on A-A;
Figure 6 is a detail view of part of Fig. 5;
Figure 7 is a horizontal cross-sectional view on B-B of Fig. 1;
Figure 8 is a horizontal cross-sectional view on C-C of Fig. 1; and

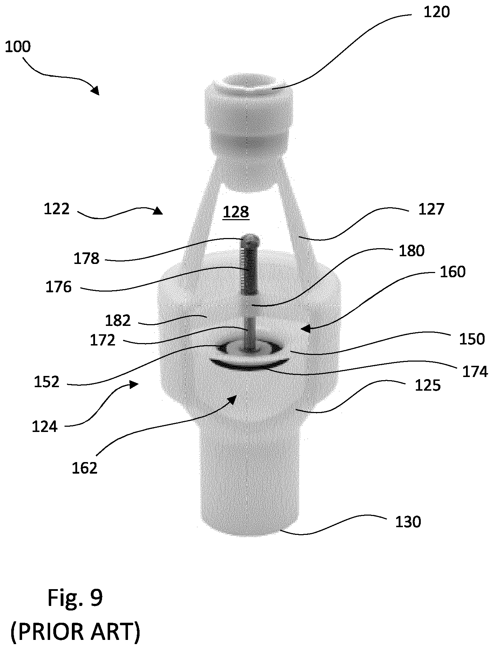

Figure 9 is a perspective view of a known dry trap tundish.

### DETAILED DESCRIPTION

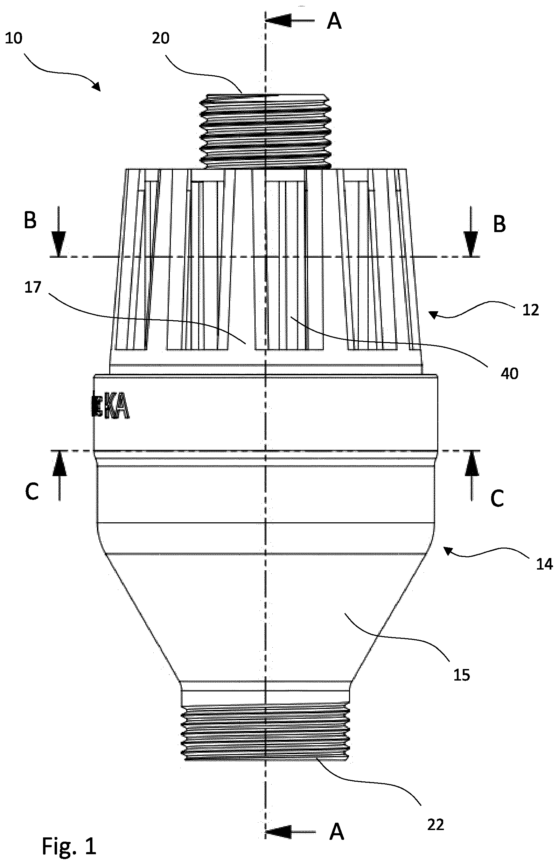

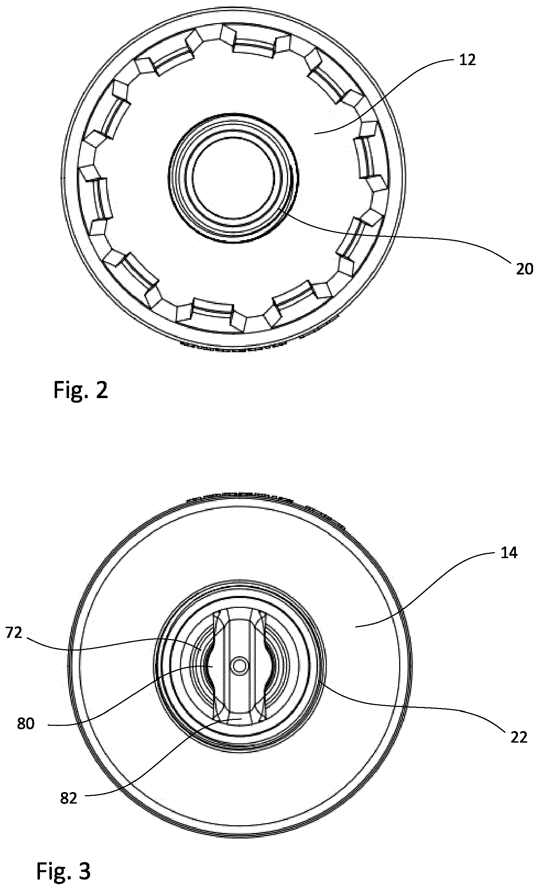

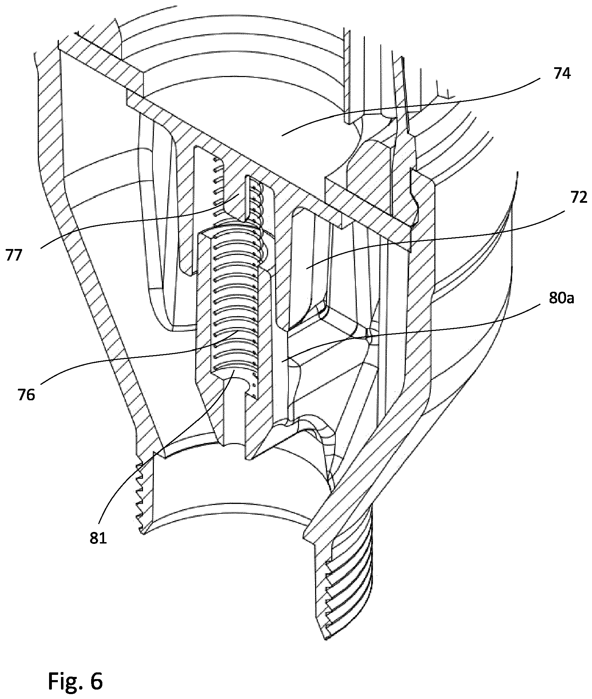

A dry trap tundish 10 according to the invention is illustrated in Figs. 1 to 8. The tundish 10 comprises a fluid inlet connector 20 at the top end of an upper housing portion 12 of the tundish, for connection to the upstream end of a discharge pipe (not shown). There is a fluid outlet connector 22 at a bottom end of a lower housing portion 14 of the tundish. The lower housing portion 14 comprises a solid peripheral wall 15 forming an open-topped cup which flares outwardly from the outlet connector 22 towards the upper housing portion 12. The outward flaring cup shape helps to channel liquid flowing through the tundish and guide it to pass onward through the outlet connector 22 under the force of gravity.

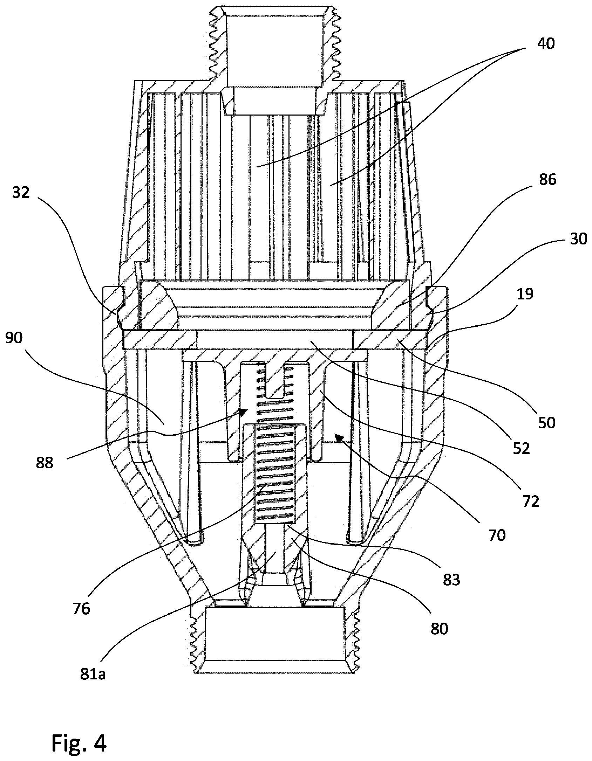

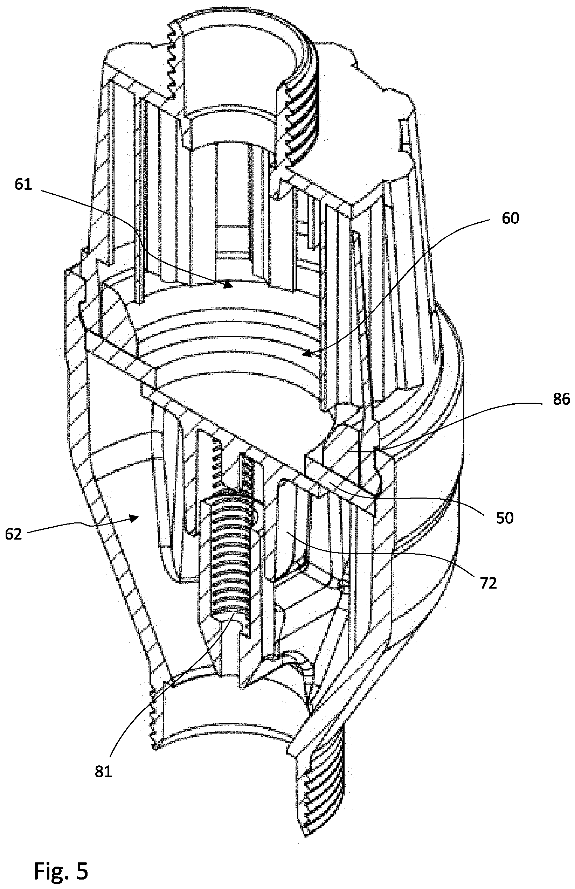

The upper housing portion 12 and the lower housing portion 14 are formed as two separate parts interconnected by a snap-fit connection. As illustrated, for example in Figs. 4 and 5, the snap-fit connection is formed by the cooperative interaction of an annular rim 30 around the bottom end of the upper housing portion 12 and a corresponding annular groove 32 encircling the upper end of the lower housing portion 14. It will be appreciated that the rim may be formed on the lower housing portion with the groove on the upper housing portion or that other forms of snap-fit connection can be envisaged.

The lower housing portion 14 is typically formed from an opaque thermoplastic material, such as an acetal co-polymer. Such a material is relatively inexpensive, yet has the required physical properties for ease of manufacture and to withstand the possibly high temperature and pressure fluid passing through the tundish 10 in use. One suitable material is POM Kepital^{®} F20-03. Black dye is preferably added. The upper housing portion 12 might also be formed of the same opaque thermoplastic material, but is preferably formed from a transparent or translucent material, such as a transparent thermoplastic. One suitable material is polypropylene. Another suitable material is Polylac^{®} ABS PA758.

A chamber is 60 defined between the inlet and outlet connectors, 20,22. A bottom edge 21 of the inlet connector 20 comprises a fluid port into the chamber 60. The chamber 60 comprises an upper chamber 61 and a lower chamber 62, separated by a dividing member 50 here in the form of a gasket with a central circular aperture 52. The gasket 50 is typically formed of EPDM rubber, but may comprise other soft, compliant impermeable materials. The gasket 50 is sized to extend to the inner surface of the peripheral wall 15 of the lower housing portion, where it is supported by an annular lip 19. The lower edge of the upper housing portion 12 abuts the top side of the gasket 50 at its outer edge. Thus, the gasket 50 extends to the junction between the upper and lower housing portions 12,14 to seal the connection therebetween.

The lower chamber 62 is at least in part defined by the peripheral wall 15 and by an underside of the gasket 50. The lower end of the lower chamber 62 is in contiguous fluid connection with the fluid outlet connector 22. The upper chamber 61 is open and is at least in part defined by a peripheral wall 17 and by a top side of the gasket 50. The upper end of the upper chamber 61 is in contiguous fluid connection with the fluid inlet connector 20. An air gap is thus defined between the inlet and outlet connectors 20,22.

A movable valve member 70 is located below the aperture 52 and is urged to close the aperture from below under the action of a biasing member in the form of a coil spring 76. The valve member includes a disc-shaped valve head 74 which is slightly larger than the aperture 52 to sealingly close the aperture, and a downwardly-depending annular skirt 72. Optionally, the valve member includes a nib 77 formed centrally on the underside of the valve head 74 to receive an upper end of the coil spring 76, thereby helping to retain a connection between the valve member 70 and the spring 76.

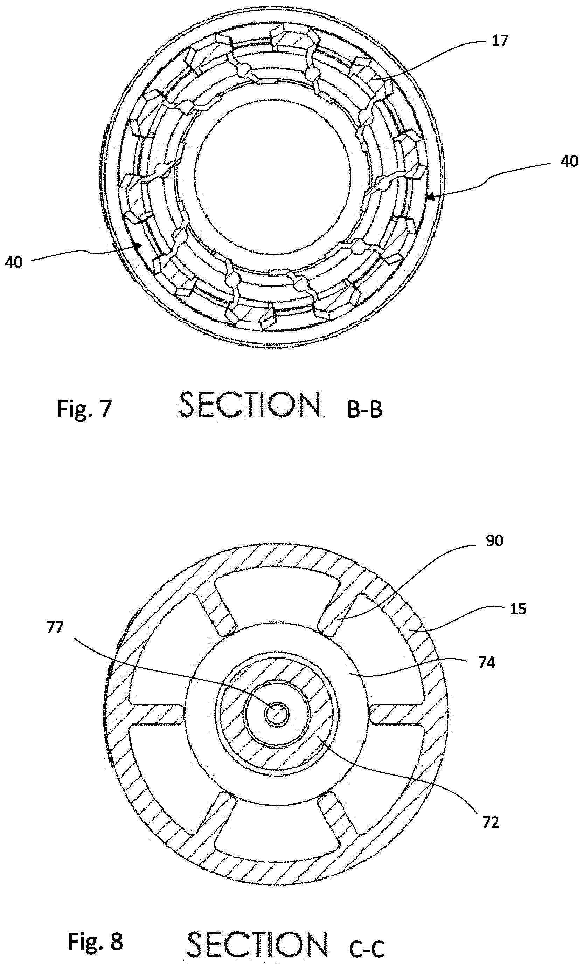

A support structure is integrally formed within the lower housing portion 14 to support and guide the valve member 70 and the spring 76. A first part of the support structure comprises a series of circumferentially spaced vertically extending ribs 90, as best seen in Fig. 8, that extend radially inwardly from the peripheral wall 15 of the lower housing portion and together define an outer annular valve guide adapted to cooperatively guide the valve head 74 during movement of the valve member 70. In particular, the inner vertical edges of the ribs 90 define a cylindrical channel in which the outer edge of the valve head 74 is guided during vertical movement as described below.

A bottom end of the coil spring 76 is received in a stepped hole 81 within a column 80 that is located centrally below the aperture 52 by a pair of struts 82 extending from the peripheral wall 15 of the lower housing portion 14. The bottom end of the coil spring 76 thus bears against a shoulder 83 formed by the step in the hole 81 to provide the required reaction force to urge the valve head 74 upwardly into sealing engagement with the gasket 50. The stepped hole 81 includes a through hole 81a at a bottom end thereof, which may help to balance pressures during movement of the valve, as explained below. The stepped hole 81 may instead be a blind hole, closed at a bottom end thereof. The struts 82 may comprise corresponding extensions to two of the ribs 90 forming the outer annular valve guide or may be completely separate.

The column 80 includes a cylindrical outer surface 80a that forms an inner valve guide adapted to cooperatively guide the annular skirt 72 of the valve member during movement of the valve member 70. Thus, at least some of the guiding and alignment mechanisms of the valve member 70 can be integrated into the member itself. The annular skirt 72 and the column 80 also define a spring chamber 88 within, which serves to shield the spring 76 from the liquid flowing through the tundish. Where provided, the though hole 81a helps in the venting of air from the valve chamber 88 when the valve member 70 is moved downwardly under force of liquid (water) flow. This equalises the pressure within the valve chamber 88 with the atmosphere, so there is no additional pressure resistance acting against the opening of the valve.

The valve member 70 is formed from plastic, for example by moulding a thermoplastic material, such as polypropylene. A plastic valve member is inexpensive and easy to manufacture. Moreover, a plastic valve member can be made very light weight. For example, the valve member may have a weight in the range of about 2.0 to 5 grams, preferably in the range of 2.3 to 4 grams, more preferably about 2.5 to 3.2 grams, such as 2.7 grams. The spring rate of the coil spring 76 can be selected in dependence on the weight of the valve member 70 and the geometry of the arrangement in order to provide a predetermined closing force against the valve seat formed around the aperture 52. One exemplary preload closing force, for a 2.7 gram valve member, is about 10 grams force. By way of example, the coil spring 76 may have a spring rate in the range of about 0.5 to 2.0 g/mm, preferably 1.0 to 1.8 g/mm, most preferably 1.5 g/mm. In one example, for a height between the shoulder 83 and the underside of the valve head 74 of 26mm, the coil spring 76 may have an uncompressed length of 28 or 30mm and be formed from spring wire of diameter 0.3 to 0.5 mm.

The tundish 10 may further comprise an annular flow diverter 86 above the gasket 50 with a chamfered upper surface for diverting liquid from the inlet connector 20 into the aperture 52. The flow diverter 86 may be formed from plastics or rubber, by way of example.

By locating the valve member 70, the biasing member 76 and the support structure within the lower chamber 62, below the gasket 50, they are all shielded from liquid in the upper chamber 61. As such, they are less prone to becoming contaminated with debris, deposits or corrosion, which could affect the function of the valve member. The configuration also permits a simplified construction, because only three moulded parts and associated tooling may be required: the upper housing portion 12; the lower housing portion 14; and the valve member 70 (the flow diverter 86 being optional), plus the gasket 50 and the spring 76, each of which may be an off-the-shelf part.

The inner valve guide may be an alternative to or in addition to the outer valve guide. By having both inner and outer valve guides, the movement of the valve member 70 can be more reliably controlled and the risk of jamming is reduced. In some embodiments, neither the inner nor the outer valve guide is provided, but this risks misalignment or jamming of the valve member.

The peripheral wall 17 that partly defines the upper chamber 61 includes a plurality of apertures 40. The upper housing portion 12 in the illustrated embodiment is substantially frustoconical in shape, with the peripheral wall 17 angled outwardly relative to a longitudinal axis of the tundish from the inlet connector 20 towards the lower housing portion 14 at an angle of approximately 5 degrees. However, the angle could fall anywhere within a range of 1 to 10 degrees, the specific angle being selected in order to meet and balance the criteria of: mitigating splashes; allowing for the draft of a mould during manufacture of the tundish; and enabling the apertures 40 to meet the requisite regulatory criteria for the air gap.

The apertures each comprise an axially extending slot 40, as described in the applicant's prior application GB2004946.6. However, it will be appreciated that the upper housing portion 12 and the apertures 40 can take many different forms and still meet the criteria for the air gap to meet regulatory requirements. The exact shape of the upper housing portion 12 is not material to the present invention.

The inlet connector 20 may comprise a standard 15 male threaded connector, and the corresponding outlet connector 22 may comprise a standard 22mm male threaded connector. However, it will be appreciated that the inlet connector 20 may comprise a standard connector in any selected one of the sizes: 15mm, 22mm, 28mm, 32mm, ½", ¾", 1" or 11/4". Likewise, the outlet connector 22 may comprise a standard connector in any selected one of the sizes: 15mm, 22mm, 28mm, 32mm, ½", ¾", 1" or 11/4", provided it is larger than the inlet size. Examples of suitable combinations include: 15 x 22mm; 22 x 28mm; 15 x 32mm; ½" x ¾"; ¾" x 1"; 1" x 1¼"; 1¼" x 1 ½"; 1½" x 2"; 2" x 2½"; and 2½" x 3".

In the tundish 10 of the specific embodiment as illustrated, the inlet and outlet connectors 20,22 are standard male threaded connectors, for example conforming to BS EN ISO 228-1. It will be appreciated that these may comprise standard compression connectors instead, for example conforming to BS EN 1254-2. The inlet and the outlet connectors may comprise any combination of male and female fittings. The inlet and outlet connectors may comprise any suitable combination of sizes and types. The connectors may be angled or straight. For example, the inlet connector 20 may comprise a 90 degree connection thereby forming an angles dry trap tundish.

In use, any back pressure within a pipe downstream of the tundish 10 would urge fluid up the pipe towards the tundish 10, where it would collect in the lower housing portion 14. Further movement of the fluid up towards the upper housing portion 12 and onward to the discharge pipe is prevented because of the valve member 70, and the air gap formed in the upper housing portion by the slits 40. If there were to be a problem with plumbing equipment upstream that would open the associated safety valve, hot water and/or steam may be discharged at high pressure along the discharge pipe and would pass through the tundish 10, entering through the inlet connector 20 and passing across the air gap and onwards through the outlet connector 22 into a downstream portion of the discharge pipe where it can discharge at a safe termination point. The tundish 10 may be rated for a flow rate of up to about 20 l/m or even greater for larger connection sizes.

In addition to that functionality as a tundish, the inclusion of the valve member 70 further acts as a dry trap to prevent the upstream flow of foul gases and the like from the downstream side of the tundish, because the valve member 70 remains closed in normal use when no liquid is flowing in the downstream direction.

Rather than taking the form of a gasket, the dividing member may comprise a more rigid part, for example integrally moulded with either the upper or the lower housing portions 12,14, but the resilience of the gasket material allows for small misalignments between the valve head 74 and the valve seat surrounding the aperture 52 to be accommodated. Moreover, the use of a gasket also allows for the dual function of sealing the interconnection between the upper and lower housing portions.

Although described by reference to a coil spring, it will be understood that alternative forms of biasing member could be used instead.

It will be appreciated that the aperture 52 can take other forms than the illustrated central circular hole, and where this is the case the valve head and the associated outer valve guide will take a corresponding different forms. Moreover, whereas the outer valve guide is described as being formed of a series of ribs 90, this is merely a preferred embodiment and it will be appreciated that other ways to guide the outer edge of the valve head 74 can be envisaged. However, one benefit of the use of the ribs 90 is that the spaces between the ribs 90 mean that dirt or contamination cannot be trapped between the valve head 74 and the outer valve guide so formed, because it is open.

Whereas the support structure is described as being integrally formed with the lower housing portion 14, it will be understood that all or part thereof could be formed as a separate component. However, forming the support structure integrally is beneficial in keeping the number of components to a minimum, thereby minimising tooling and assembly costs.

A single strut 82 could be used instead of the pair of struts as illustrated. More struts 82 could be used too, but additional struts could impede the flow of liquid through the tundish 10.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The scope of the invention is defined by the appended claims.

## Claims

1. A dry trap tundish (10) comprising:
An upper housing portion (12) including a liquid inlet connector (20) at an upper end thereof;
a lower housing portion (14) including a liquid outlet connector (22) at a lower end thereof;
a chamber (60) defined by peripheral walls (15, 17) of the upper and lower housing portions (12,14) between the inlet and outlet connectors (20, 22), wherein the chamber is divided into an open upper chamber (61) and a closable lower chamber (62) by a dividing member (50) comprising an aperture (52); and
a movable valve member (70) urged to close the aperture (52) from below under the action of a biasing member (76) and guided by a support structure (80, 82, 90);
wherein the valve member (70) and the biasing member (76) are fully located below the dividing member (50),
**characterized in that** the support structure (80,82,90) is fully located below the dividing member (50).

2. The dry trap tundish of claim 1, wherein the valve member comprises a disc-shaped valve head (74).

3. The dry trap tundish of claim 2, wherein the support structure comprises an outer annular valve guide adapted to cooperatively guide the valve head during movement of the valve member.

4. The dry trap tundish of claim 3, wherein the outer annular valve guide comprises ribs (90) extending radially inwardly from the peripheral wall of the lower housing portion (14).

5. The dry trap tundish of any preceding claim, wherein the biasing member comprises a coil spring (76), and wherein preferably the support structure includes a stepped hole (81) in which a bottom end of the spring (76) is received.

6. The dry trap tundish of claim 5, wherein the support structure includes a column (80) in which the stepped hole (81) is located, wherein the column (80) is preferably connected to the peripheral wall (15) of the lower housing portion (14) via one or more struts (82).

7. The dry trap tundish of claim 6, wherein the column (80) includes an outer surface (80a) that forms an inner valve guide adapted to cooperatively guide an annular skirt (72) of the valve member during movement thereof.

8. The dry trap tundish of any of claims 5 to 7, wherein the coil spring (76) has a spring rate in the range of 0.5 to 2.0 g/mm, preferably 1.0 to 1.8 g/mm, most preferably 1.5 g/mm.

9. The dry trap tundish of any preceding claim, wherein the valve member (70) is plastic.

10. The dry trap tundish of any preceding claim, wherein the valve member (70) has a weight in the range of 2.0 to 5 grams, preferably in the range of 2.3 to 4 grams, more preferably about 2.5 to 3.2 grams, such as 2.7 grams.

11. The dry trap tundish of any preceding claim, wherein the dividing member comprising an aperture comprises a gasket (50).

12. The dry trap tundish of any preceding claim, further comprising an annular flow diverter (86) above the dividing member (50) for diverting liquid from the inlet connector (20) into the aperture (52).

13. The dry trap tundish of any preceding claim, wherein the upper housing portion (12) and the lower housing portion (14) are interconnected by a snap-fit connection.

14. The dry trap tundish of any preceding claim, formed from a thermoplastic material.

15. The dry trap tundish of claim 14, wherein the upper housing portion (12) is formed from a transparent material, wherein the transparent material preferably comprises polypropylene or ABS PA758, and wherein the lower housing portion (14) is preferably formed from acetal copolymer.

## Patentansprüche

1. Trockenfallen-Abflusstrichter (10), umfassend:
einen oberen Gehäuseabschnitt (12), der einen Flüssigkeitseinlassverbinder (20) an einem oberen Ende davon einschließt,
einen unteren Gehäuseabschnitt (14), der einen Flüssigkeitsauslassverbinder (22) an einem unteren Ende davon einschließt,
eine Kammer (60), die durch Umfangswände (15, 17) des oberen und des unteren Gehäuseabschnitts (12, 14) zwischen dem Einlass- und dem Auslassverbinder (20, 22) definiert ist, wobei die Kammer durch ein Unterteilungselement (50), das einen Durchlass (52) umfasst, in eine offene obere Kammer (61) und eine schließbare untere Kammer (62) unterteilt ist, und
ein bewegbares Ventilelement (70), das dazu gedrängt wird, den Durchlass (52) von unten unter der Einwirkung eines Vorspannelements (76) zu schließen, und durch eine Stützstruktur (80, 82, 90) geführt ist,
wobei sich das Ventilelement (70) und das Vorspannelement (76) vollständig unter dem Unterteilungselement (50) befinden,
**dadurch gekennzeichnet, dass** sich die Stützstruktur (80, 82, 90) vollständig unter dem Unterteilungselement (50) befindet.

2. Trockenfallen-Abflusstrichter nach Anspruch 1, wobei das Ventilelement einen scheibenförmigen Ventilteller (74) umfasst.

3. Trockenfallen-Abflusstrichter nach Anspruch 2, wobei die Stützstruktur eine äußere ringförmige Ventilführung umfasst, die dazu ausgelegt ist, den Ventilteller während einer Bewegung des Ventilelements zusammenwirkend zu führen.

4. Trockenfallen-Abflusstrichter nach Anspruch 3, wobei die äußere ringförmige Ventilführung Rippen (90) umfasst, die sich von der Umfangswand des unteren Gehäuseabschnitts (14) radial nach innen erstrecken.

5. Trockenfallen-Abflusstrichter nach einem vorhergehenden Anspruch, wobei das Vorspannelement eine Schraubenfeder (76) umfasst und wobei die Stützstruktur bevorzugt ein gestuftes Loch (81) einschließt, in dem ein unteres Ende der Feder (76) aufgenommen ist.

6. Trockenfallen-Abflusstrichter nach Anspruch 5, wobei die Stützstruktur eine Säule (80) einschließt, in der sich das gestufte Loch (81) befindet, wobei die Säule (80) bevorzugt über eine oder mehrere Streben (82) mit der Umfangswand (15) des unteren Gehäuseabschnitts (14) verbunden ist.

7. Trockenfallen-Abflusstrichter nach Anspruch 6, wobei die Säule (80) eine äußere Oberfläche (80a) einschließt, die eine innere Ventilführung ausbildet, die dazu ausgelegt ist, eine ringförmige Schürze (72) des Ventilelements während einer Bewegung davon zusammenwirkend zu führen.

8. Trockenfallen-Abflusstrichter nach einem der Ansprüche 5 bis 7, wobei die Schraubenfeder (76) eine Federrate im Bereich von 0,5 bis 2,0 g/mm, bevorzugt 1,0 bis 1,8 g/mm, am stärksten bevorzugt 1,5 g/mm, aufweist.

9. Trockenfallen-Abflusstrichter nach einem vorhergehenden Anspruch, wobei das Ventilelement (70) aus Kunststoff ist.

10. Trockenfallen-Abflusstrichter nach einem vorhergehenden Anspruch, wobei das Ventilelement (70) ein Gewicht im Bereich von 2,0 bis 5 Gramm, bevorzugt im Bereich von 2,3 bis 4 Gramm, stärker bevorzugt etwa 2,5 bis 3,2 Gramm, wie etwa 2,7 Gramm, aufweist.

11. Trockenfallen-Abflusstrichter nach einem vorhergehenden Anspruch, wobei das Unterteilungselement, das einen Durchlass umfasst, eine Dichtung (50) umfasst.

12. Trockenfallen-Abflusstrichter nach einem vorhergehenden Anspruch, ferner umfassend einen ringförmigen Strömungsumleiter (86) über dem Unterteilungselement (50) zum Umleiten von Flüssigkeit von dem Einlassverbinder (20) in den Durchlass (52).

13. Trockenfallen-Abflusstrichter nach einem vorhergehenden Anspruch, wobei der obere Gehäuseabschnitt (12) und der untere Gehäuseabschnitt (14) durch eine Schnappverbindung miteinander verbunden sind.

14. Trockenfallen-Abflusstrichter nach einem vorhergehenden Anspruch, der aus einem thermoplastischen Material ausgebildet ist.

15. Trockenfallen-Abflusstrichter nach Anspruch 14, wobei der obere Gehäuseabschnitt (12) aus einem transparenten Material ausgebildet ist, wobei das transparente Material bevorzugt Polypropylen oder ABS PA758 umfasst und wobei der untere Gehäuseabschnitt (14) bevorzugt aus Acetalcopolymer ausgebildet ist.

## Revendications

1. Panier de coulée à robinet à sec (10) comprenant :
une partie de boîtier haute (12) comprenant un raccord d'entrée de liquide (20) au niveau d'une extrémité supérieure de celle-ci ;
une partie de boîtier basse (14) comprenant un raccord de sortie de liquide (22) au niveau d'une extrémité inférieure de celle-ci ;
une chambre (60) définie par des parois périphériques (15, 17) des parties de boîtier supérieure et inférieure (12, 14) entre les raccords d'entrée et de sortie (20, 22), dans lequel la chambre est divisée en une chambre supérieure ouverte (61) et une chambre inférieure fermable (62) par un élément de séparation (50) comprenant une ouverture (52) ; et
un élément de vanne mobile (70) poussé pour fermer l'ouverture (52) par le bas sous l'action d'un élément de sollicitation (76) et guidé par une structure de support (80, 82, 90) ;
dans lequel l'élément de vanne (70) et l'élément de sollicitation (76) sont entièrement situés au-dessous de l'élément de séparation (50),
**caractérisé en ce que** la structure de support (80, 82, 90) est entièrement située au-dessous de l'élément de séparation (50).

2. Panier de coulée à robinet à sec selon la revendication 1, dans lequel l'élément de vanne comprend une tête de vanne en forme de disque (74).

3. Panier de coulée à robinet à sec selon la revendication 2, dans lequel la structure de support comprend un guide de vanne annulaire externe adapté pour guider de manière coopérative la tête de vanne pendant le mouvement de l'élément de vanne.

4. Panier de coulée à robinet à sec selon la revendication 3, dans lequel le guide de vanne annulaire externe comprend des nervures (90) s'étendant radialement vers l'intérieur à partir de la paroi périphérique de la partie de boîtier basse (14).

5. Panier de coulée à robinet à sec selon l'une quelconque des revendications précédentes, dans lequel l'élément de sollicitation comprend un ressort hélicoïdal (76), et dans lequel, de préférence, la structure de support comprend un trou étagé (81) dans lequel une extrémité inférieure du ressort (76) est reçue.

6. Panier de coulée à robinet à sec selon la revendication 5, dans lequel la structure de support comprend une colonne (80) dans laquelle le trou étagé (81) est situé, dans lequel la colonne (80) est de préférence reliée à la paroi périphérique (15) de la partie de boîtier basse (14) via une ou plusieurs entretoises (82).

7. Panier de coulée à robinet à sec selon la revendication 6, dans lequel la colonne (80) comprend une surface externe (80a) qui forme un guide de vanne interne adapté pour guider de manière coopérative une jupe annulaire (72) de l'élément de vanne pendant son mouvement.

8. Panier de coulée à robinet à sec selon l'une quelconque des revendications 5 à 7, dans lequel le ressort hélicoïdal (76) a une constante de rappel comprise dans la plage de 0,5 à 2,0 g/mm, de préférence de 1,0 à 1,8 g/mm, le plus préférablement 1,5 g/mm.

9. Panier de coulée à robinet à sec selon l'une quelconque des revendications précédentes, dans lequel l'élément de vanne (70) est en plastique.

10. Panier de coulée à robinet à sec selon l'une quelconque des revendications précédentes, dans lequel l'élément de vanne (70) a un poids compris dans la plage de 2,0 à 5 grammes, de préférence de 2,3 à 4 grammes, plus préférablement environ 2,5 à 3,2 grammes, tel que 2,7 grammes.

11. Panier de coulée à robinet à sec selon l'une quelconque des revendications précédentes, dans lequel l'élément de séparation comprenant une ouverture comprend un joint (50).

12. Panier de coulée à robinet à sec selon l'une quelconque des revendications précédentes, comprenant en outre un déflecteur de flux annulaire (86) au-dessus de l'élément de séparation (50) pour dévier le liquide en provenance du raccord d'entrée (20) dans l'ouverture (52).

13. Panier de coulée à robinet à sec selon l'une quelconque des revendications précédentes, dans lequel la partie de boîtier haute (12) et la partie de boîtier basse (14) sont reliées entre elles par une connexion à encliquetage.

14. Panier de coulée à robinet à sec selon l'une quelconque des revendications précédentes, formé à partir d'un matériau thermoplastique.

15. Panier de coulée à robinet à sec selon la revendication 14, dans lequel la partie de boîtier haute (12) est formée à partir d'un matériau transparent, dans lequel le matériau transparent comprend de préférence du polypropylène ou de l'ABS PA758, et dans lequel la partie de boîtier basse (14) est de préférence formée à partir de copolymère d'acétal.
